# EUROPEAN PATENT SPECIFICATION

(11) **EP 1 911 664 B1**
(45) Date of publication and mention of the grant of the patent: **15.04.2009**
(21) Application number: 07019542.5
(22) Date of filing: 05.10.2007
(51) Int. Cl.: B62D 35/00

(54) **Rear spoiler mounting structure**
Rückspoilermontagestruktur
Structure d'assemblage de déflecteur arrière

(30) Priority: 10.10.2006 JP 2006276879
(43) Date of publication of application: 16.04.2008
(73) Proprietor: Honda Motor Co., Ltd., Tokyo 107-8556 (JP)
(72) Inventor: Saitoh, Hajime, Wako-shi, Saitama 351-0193 (JP); Sase, Hiroyuki, Wako-shi, Saitama 351-0193 (JP); Ichinose, Tomofumi, Wako-shi, Saitama 351-0193 (JP); Saegusa, Hiroyuki, Wako-shi, Saitama 351-0193 (JP)
(74) Representative: Trossin, Hans-Jürgen

(56) References cited:
- DE-A1- 3 539 177
- DE-A1- 4 004 640
- FR-A- 2 826 626
- JP-A- 10 305 787

## Description

The present invention relates to a structure for fixedly mounting a rear spoiler on a rear section of a vehicle body, according to the preamble of claim 1.

A structure of the generic kind is known from DE 4 004 640 A1. A further overview of related prior art is given below:

There have been known techniques for fixedly mounting a rear spoiler on a rear section of an automotive vehicle body in order to, for example, obtain an operational stability of a traveling vehicle by adjusting an air flow so as to press down the vehicle body with an air pressure.

Rear spoilers are popularly known as disclosed, for example, in Japanese Patent Laid-Open Publication No. JP-A-10-305787. The disclosed rear spoiler is mounted on an upper frame portion of a rear door of an automotive vehicle and overhangs rearwardly from the rear door.

Some of the automotive vehicles known today include a resin exterior member provided on a rear section of the vehicle body for purposes of an enhanced outer appearance etc. In such automotive vehicles, the rear spoiler is mounted on the resin exterior member. In the case where the rear spoiler is mounted on the resin exterior member, however, the rear spoiler is held pressed against the resin exterior member, and thus, it would be positionally displaced relative to the exterior member when thermal deformation (thermal expansion) occurs in the rear spoiler and exterior member. As a consequence, the rear spoiler and exterior member can not be maintained in good outer appearance.

It is preferable that the rear spoiler be mounted in a stable fixed state because air resistance or drag acts on the rear spoiler during travel of the vehicle. However, the resin exterior member has smaller rigidity than steel-made members, and thus, in the case where the rear spoiler is mounted on the resin exterior member, it would be very difficult for the rear spoiler to be kept mounted in a stable fixed state.

In view of the foregoing prior art problems, it is an object of the present invention to provide an improved rear spoiler mounting structure which can maintain a rear spoiler and resin exterior member in good appearance and which can maintain the rear spoiler in a stable fixed state.

In order to accomplish the above-mentioned object, the present invention provides an improved structure for mounting a rear spoiler, with all features of claim 1. An embodiment of the present invention comprises: a resin garnish attached to a vehicle body for use as an exterior member of the vehicle, the garnish having a plurality of through-holes formed therein; and a fixation unit extending from the rear spoiler to the vehicle body, via the through-holes, for fixing the rear spoiler to the vehicle body with the rear spoiler positioned on the garnish.

Because the rear spoiler is fixedly mounted on the vehicle body using the fixation unit as stated above, the present invention can hold the rear spoiler in a state where the rear spoiler does not impart a pressing force to the resin garnish. Thus, even when thermal deformation (thermal expansion) has occurred in the rear spoiler and garnish, the rear spoiler and garnish can be prevented from being positionally displaced relative to each other in mutually-contacting relation. As a result, the rear spoiler and garnish can be maintained in good outer appearance.

Further, with the rear spoiler fixed to the vehicle body using the fixation unit, the present invention allows the rear spoiler to be securely fixed in place. Thus, even when air resistance (drag) acts on the rear spoiler, the rear spoiler can be held in a stable fixed state.

According to the invention, the fixation unit further includes a plurality of interval defining members for defining an interval between the rear spoiler and the vehicle body. Thus, such an interval formed by the interval defining members can provide a given mounting space. By the garnish being accommodated in the mounting space, it is possible to prevent a load from being applied by the fixation unit to the garnish when the rear spoiler is fixedly mounted in place by means of the fixation unit.

Preferably, the rear spoiler includes a positioning unit for positioning the rear spoiler relative to the garnish, so that the rear spoiler can be appropriately positioned relative to the garnish that is appropriately positioned and fixed in advance to the vehicle body. Thus, by being appropriately positioned relative to the garnish, the rear spoiler can be positioned on a predetermined mounting position of the vehicle body, and therefore, the rear spoiler can be attached or assembled to the vehicle body with an enhanced efficiency. Furthermore, with the rear spoiler appropriately positioned relative to the garnish by use of the positioning unit, the rear spoiler can be fixed to the garnish with an increased accuracy.

Preferably, the fixation unit includes a plurality of screw fastener members. Thus, the rear spoiler can be screwed to the vehicle body and thus can be reliably assembled to the vehicle body.

In order to allow the rear spoiler to be held in an even more appropriate condition, a resilient member may be interposed between the rear spoiler and the garnish. In this case, a force for fixing the rear spoiler is applied to the garnish via the resilient member, but the fixing force applied to the garnish via the resilient member can be appropriately adjusted by adjusting the tightening amounts of the screw fastener members.

Preferably, the garnish and the rear spoiler are formed of mutually different resin materials. Namely, the garnish may be formed of a resin material of a superior design quality, while the rear spoiler may be formed of a resin material of a superior strength with an air pressure taken into account. For example, the garnish may be formed of a polycarbonate material, while the rear spoiler may be formed of an ABS resin material. The rear spoiler is held in a state where it does not impart a pressing force to the resin garnish. Thus, even when different thermal deformations (thermal expansions) have occurred in the rear spoiler and garnish, the rear spoiler can be maintained in a stable fixed state.

Certain preferred embodiments of the present invention will be described in detail below, by way of example only, with reference to the accompanying drawings, in which:
Fig. 1 is a perspective view showing a rear section of a vehicle where a rear spoiler according to a first embodiment of the present invention is mounted;
Fig. 2 is an exploded perspective view of the rear spoiler and garnish shown in Fig. 1;
Fig. 3 is an exploded view explanatory of how the garnish of Fig. 2 is mounted to a tailgate;
Fig. 4 is an exploded view of first and second screw fastener members and a left positioning member;
Fig. 5 is an exploded view of the first screw fastener member shown in Fig. 4;
Fig. 6 is a sectional view taken along line 6 - 6 of Fig. 1;
Fig. 7 is an exploded view explanatory of how the rear spoiler is fixed to a left frame member by means of a left screw fastener member of Fig. 2 via a left mounting bracket;
Fig. 8 is a sectional view taken along line 8 - 8 of Fig. 1;
Fig. 9 is an exploded view of a left positioning member shown in Fig. 2;
Fig. 10 is a sectional view taken along line 10 - 10 of Fig. 1;
Figs. 11A and 11B are sectional views explanatory of how the rear spoiler is positioned relative to the garnish;
Figs. 12A and 12B are sectional views explanatory of how the rear spoiler is fixed to a vehicle body;
Fig. 13 is an exploded view showing a second embodiment of the present invention which employs a modified first screw fastener member; and
Fig. 14 is a sectional view showing the rear spoiler fixed to the vehicle body by means of the modified first screw fastener member shown in Fig. 13.

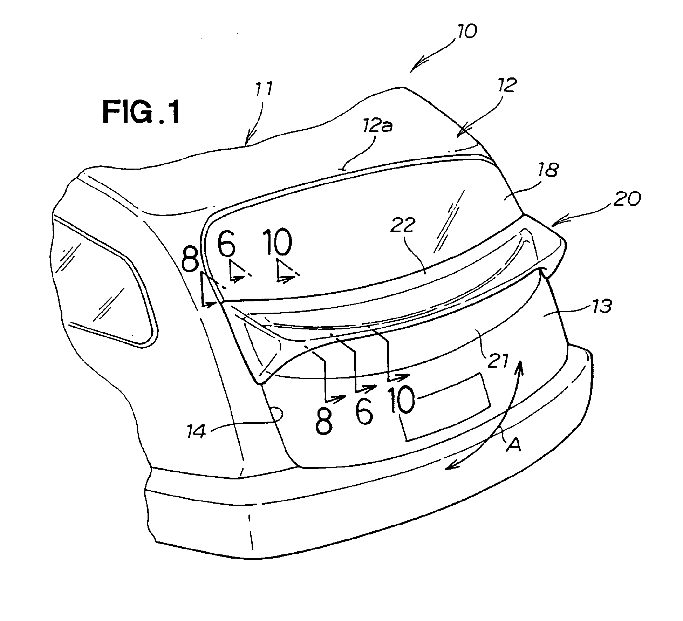

Reference is now made to Figs. 1-12 showing a rear spoiler mounting structure according to a first embodiment of the present invention, of which Fig. 1 shows a rear section of a vehicle where the rear spoiler is mounted.

As shown in Fig. 1, the vehicle 100 includes a tailgate 13 provided in a rear section 12 of a vehicle body 11, and a tailgate opening 14 in the vehicle body rear section 12 is openable and closeable with the tailgate 13.

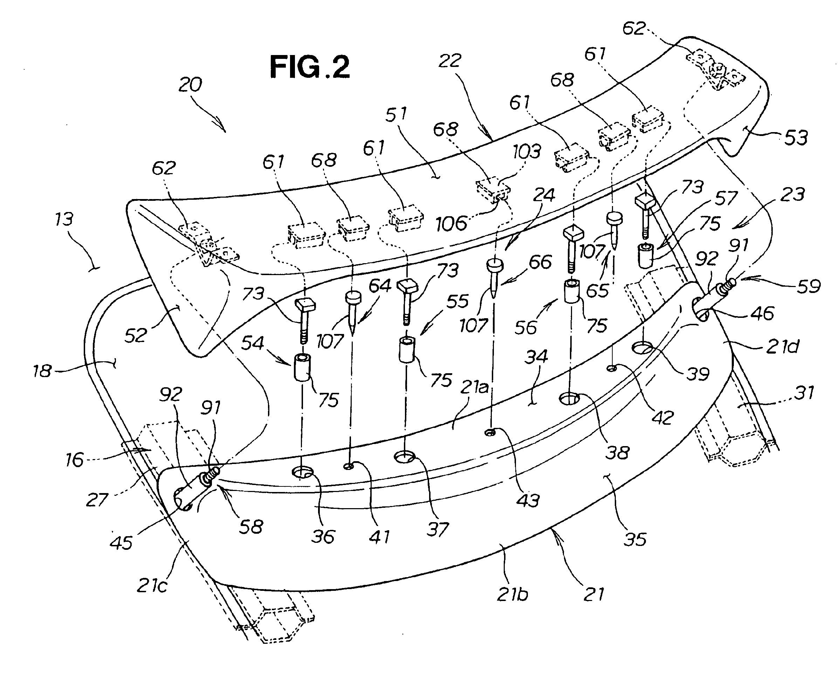

Tailgate frame 16 (see Fig. 2) of the tailgate 13 is connected at its upper end portion to the upper end 12a of the vehicle body rear section 12 via a hinge (not shown). The tailgate 13 has a tailgate windowpane 18 mounted in an upper half of the tailgate frame 16.

The rear spoiler mounting structure 20 of the present invention is provided adjacent to the lower edge of the tailgate windowpane 18 and extends widthwise of the vehicle in a substantial vertically-middle section of the tailgate 13.

The tailgate opening 14 of the vehicle body rear section 12 can be opened and closed by vertically pivoting the tailgate 13 about the above-mentioned hinge as indicated by arrow A.

The following paragraphs describe the rear spoiler mounting structure 20 of the present invention, with reference to Figs. 2 to 10.

As illustrated in Fig. 2, the rear spoiler mounting structure 20 includes: a resin garnish 21 to be fixed to the tailgate 13; a resin rear spoiler 22 to be mounted on the garnish 21; a fixation unit 23 for fixing the rear spoiler 22 to the tailgate 13; and a positioning unit 24 for positioning the rear spoiler 22 relative to the garnish 21.

The resin garnish 21, which is an exterior member having a relatively high design quality for an enhanced outer appearance, is fixed to the tailgate 13 to extend widthwise of the vehicle and made of, for example, a transparent polycarbonate material.

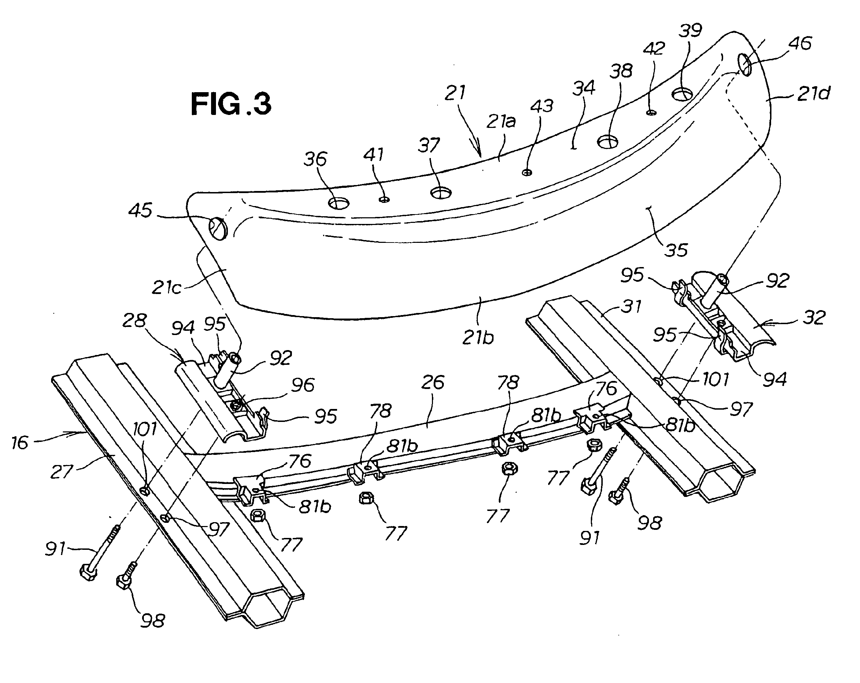

As seen in Fig. 3, the resin garnish 21 is fixed at its upper end portion 21a to a middle upper frame member 26 of the tailgate frame 16, and fixed at its lower end portion 21b to a middle lower frame member (not shown) of the tailgate frame 16. Further, the resin garnish 21 is fixed at its left end portion 21c to a left frame member 27 of the tailgate frame 16 via a left mounting bracket 28, and fixed at its right end portion 21d to a right frame member 31 of the tailgate frame 16 via a right mounting bracket 32.

The garnish 21 has an upper wall 34 extending generally horizontally toward the front of the vehicle body, and a rear wall 35 extending downward from the rear end of the upper wall 34.

The upper wall 34 is formed into a substantial falcate (or crescent) shape and has first, second, third and fourth through-holes 36, 37, 38 and 39, left and right positioning holes 41 and 42 and a middle positioning hole 43; each of the holes 36, 37, 38, 39, 41, 42 and 43 is formed to face the tailgate 13.

The first through-hole 36 and fourth through-hole 39 are formed in the upper wall 34 in left-right horizontal symmetric relation to each other with respect to an imaginary longitudinal centerline of the vehicle. Similarly, the second through-hole 37 and third through-hole 38 are formed in the upper wall 34 in left-right horizontal symmetric relation to each other with respect to the imaginary longitudinal centerline of the vehicle, and the left positioning hole 41 and right positioning hole 42 are formed in the upper wall 34 in left-right horizontal symmetric relation to each other with respect to the imaginary longitudinal centerline of the vehicle. The middle positioning hole 43 is formed in a substantial middle position, in the vehicle body width direction, of the upper wall 34.

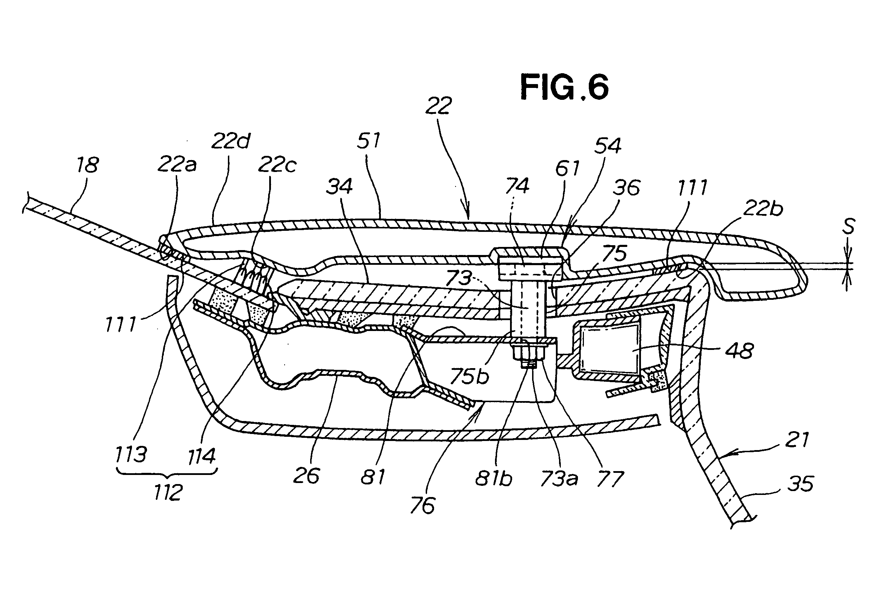

The rear wall 35 of the garnish 21 has a left through-hole 45 formed in the left end portion 21c to face the tailgate 13, and a right through-hole 46 formed in the right end portion 21d to face the tailgate 13. Stop lamps 48 (see Fig. 6), capable of emitting light rearwardly from the vehicle body, is disposed on the reverse side of the rear wall 35.

Referring back to Fig. 2, the rear spoiler 22 includes a spoiler body 51 disposed on the rear wall 34 of the resin garnish 21, a left leg portion 52 extending downwardly from the left end of the spoiler body 51, and a right leg portion 53 extending downwardly from the right end of the spoiler body 51. This rear spoiler 22, which is a member having a great strength in consideration of air resistance or drag, is formed, for example, of ABS (acrylonitrile-butadienestyrene) resin. Namely, the rear spoiler 22 is formed of a different resin material from the garnish 21. More specifically, in the instant embodiment, the garnish 21 is formed of a resin material of a superior design quality, while the rear spoiler 22 is formed of a resin material of a superior mechanical strength.

Curved band-like portion of the spoiler body 51 is disposed generally parallel to and at a predetermined interval from the upper wall 34 of the garnish 21, thereby covering the upper wall 34.

The fixation unit 23 includes a plurality of bolt fastener members 61 disposed on reverse-side positions of the spoiler body 51 which correspond to the first to fourth through-holes 36 - 39 of the garnish 21. The fixation unit 23 also includes side engaging members 62 on reverse-side positions of the reverse side of the spoiler body 51 which correspond to the left and right through-holes 45 and 46. Further, the positioning unit 24 has a plurality of pin fastener members 68 disposed on reverse-side positions of the garnish 21 which correspond to the left and right positioning holes 41 and 42 and middle positioning hole 43.

The left leg portion 52 is disposed outwardly of and covers the left end portion 21c of the garnish 21. The right leg portion 53 is disposed outwardly of and covers the right end portion 21d of the garnish 21.

The fixation unit 23 for fixing the rear spoiler 22 to the tailgate 13 has first, second, third and fourth screw fastener members 54, 55, 56 and 57, and left and right screw fastener members 58 and 59.

The first and fourth screw fastener members 54 and 57 are located in left-right horizontal symmetric relation to each other with respect to the imaginary longitudinal centerline of the vehicle. Similarly, the second and third screw fastener members 55 and 56 are located in left-right horizontal symmetric relation to each other, and the left and right screw fastener members 58 and 59 are located in left-right horizontal symmetric relation to each other.

The first and fourth screw fastener members 54 and 57 are formed of same or similar materials, and thus, the following paragraphs representatively describe only the first screw fastener member 54 with a description about the second to fourth screw fastener members 55 - 57 omitted for simplicity.

Further, the left and right screw fastener members 58 and 59 are formed of a same material, and thus, the following paragraphs representatively describe only the left screw fastener member 58 with a description about the right screw fastener member 59 omitted for simplicity.

The positioning unit 24, which positions the rear spoiler 22 relative to the resin garnish 21, includes left and right positioning members 64 and 65 and middle positioning member 66 disposed on the rear spoiler 22. The left and right positioning members 64 and 65 are located in left-right horizontal symmetric relation to each other with respect to the imaginary longitudinal centerline of the vehicle.

Further, the left and right positioning members 64 and 65 are formed of a same material, and thus, the following paragraphs representatively describe only the left positioning member 64 with a description about the right positioning member 65 omitted for simplicity.

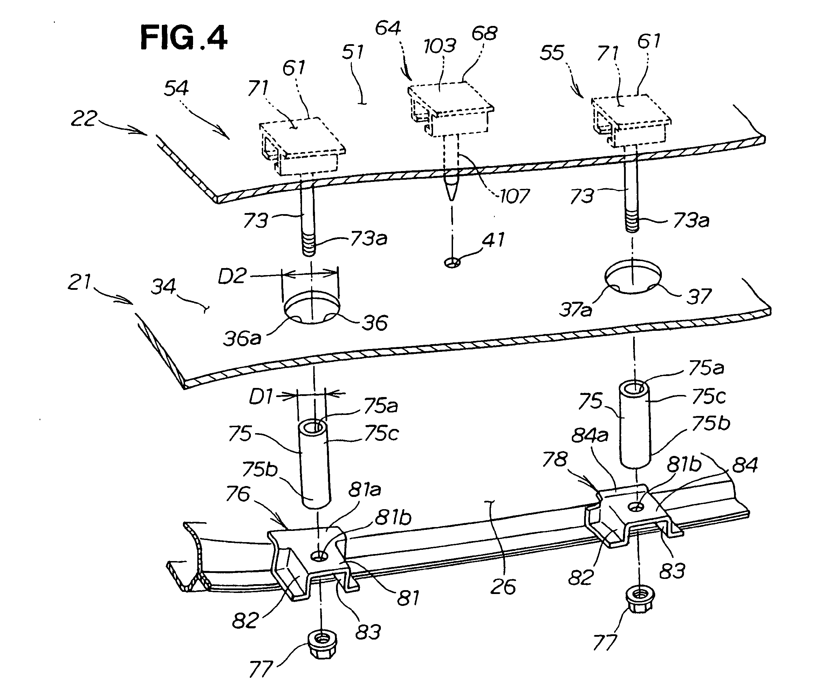

Referring to Fig. 4, the first screw fastener member 54 includes: the bolt fastener member 61 having a base portion 71 embedded in the spoiler body 51; a fastening bolt 73 fixed to the bolt fastener member 61; an interval defining (spacer) member 75 in which the fastening bolt 73 is fitted; a fastening bracket 73 provided on the middle upper frame member 26 for placing thereon the interval defining member 75; and a fastening nut 77 screwing the fastening bracket 76 to the fastening bolt 73 passed through the fixing bracket 76.

The interval defining (spacer) member 75 is a tubular member having a through-hole 75a for fitting engagement therein of the fastening bolt 73. The interval defining member 75 is a collar member which passes through the first through-hole 36 of the garnish 21 with the fastening bolt 73 fitted therein and thereby keeps a predetermined interval between the spoiler body 51 and the tailgate 13.

The interval defining member 75 has an outer diameter D1 smaller than an outer diameter D2 of the first through-hole 36. With the interval defining member 75 passed through the first hole 36 in concentric relation thereto, a predetermined interval can be secured between the peripheral edge 36a of the first through-hole 36 and the outer periphery of the interval defining member 75. Thus, it is possible to prevent the peripheral edge 36a of the first through-hole 36 from interfering with the interval defining member 75 when the resin garnish 21 has thermally deformed (or expanded).

The fastening bracket 76 includes a substantially-horizontal supporting portion 81, a left wall portion 82 provided to the left of the substantially-horizontal supporting portion 81, and a right wall portion 83 provided to the right of the horizontal supporting portion 81. The fastening bracket 76 is fixed, for example, to a left-end curved portion of the middle upper frame member 26. The supporting portion 81 has a projection 81a that preferably greatly projects forward, so that the projection 81a can be reliably joined to the middle upper frame member 26 to achieve reliable fixation of the fastening bracket 76.

The supporting portion 81 also has a mounting hole 81b formed substantially centrally therein. The mounting hole 81b permits passage therethrough of the fastening bolt 73, but does not permit passage therethrough of the interval defining member 75. Thus, a lower end portion 75b of the interval defining member 75 is placed on the supporting portion 81 with the interval defining member 75 positioned coaxially with the mounting hole 81b. Threaded portion 73a of the fastening bolt 73 is inserted in the mounting hole 81b, and the fastening nut 77 is screwed onto the threaded portion 73a projecting downward out of the mounting hole 81b. Upper end portion 75c of the interval defining member 75 abuts against the bottom of the bolt fastener member 61.

The second screw fastener member 55 is similar in construction to the aforementioned first screw fastener member 54, except for the construction of the fastening bracket. Namely, in the fastening bracket 78 of the second screw fastener member 55, the projection 84a of the supporting portion 84 projects by a smaller length than the projection 81a of the first screw fastener member 54.

The fastening bracket 78 of the second screw fastener member 55 is fixed to a straight portion of the middle upper frame member 26, and thus, the projection 84a of the supporting portion 84 can be reliably joined to the middle upper frame member 26 even where the projection 84a of the supporting portion 84 does not project so greatly.

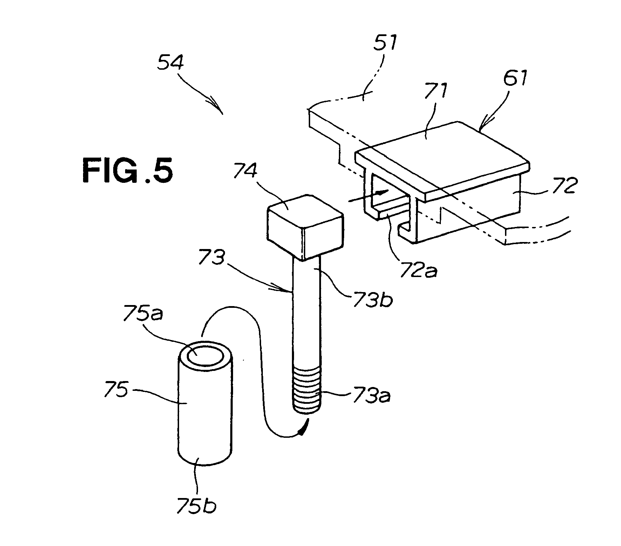

Fig. 5 shows the bolt fastener member 61 and fastening bolt 73 of the first screw fastener member 54. As shown in Fig. 5, the base portion 71 of the bolt fastener member 61 is formed into a generally rectangular shape. The bolt fastener member 61 has an engaging portion 72 formed integrally with the lower end of the base portion 71, and a guide groove 72a is formed in the bottom of the engaging portion 72.

By the base portion 71 being embedded in the spoiler body 51, the bolt fastener member 61 is integrally secured to the spoiler body 51.

The fastening bolt 73 of the first screw fastener member 54 is engaged in the engaging portion 72. The fastening bolt 73 has a rectangular head portion 74 and a threaded portion 73a formed in a lower end portion thereof.

By the head portion 74 of the fastening bolt 73 being inserted in the engaging portion 72 and a lower neck portion 73b of the fastening bolt 73 being inserted in the above-mentioned guide groove 72a, the fastening bolt 73 is fixed to the bolt fastener member 61.

Because of the rectangular head portion 74 of the fastening bolt 73, the fastening bolt 73 can be prevented from rotating while the fastening bolt 73 is held in engagement with the bolt fastener member 61. Namely, the fastening bolt 73 is non-rotatably fixed, via the bolt fastener member 61, to the spoiler body 51 and inserted through the interval defining member 75.

The guide groove 72a of the first screw fastener member 54 is oriented in the width direction of the vehicle, so that the fastening bolt 73 is positionally adjustable in the width direction of the vehicle.

In the second screw fastener member 55 shown in Fig. 4 too, the guide groove 72a is oriented in the width direction of the vehicle, so that the fastening bolt 73 is positionally adjustable in the width direction of the vehicle.

Further, similarly, the guide grooves 72a in the third and fourth screw fastener members 56 and 57 are oriented in the width direction of the vehicle, so that the respective fastening bolts 73 are positionally adjustable in the width direction of the vehicle.

With the respective fastening bolts 73 of the first, second, third and fourth screw fastener members 54, 55, 56 and 57 constructed to be adjustable in the width direction of the vehicle in the manner as set forth above, the rear spoiler 22 can be attached in place even more easily.

Fig. 6 shows the rear spoiler 22 supported on the vehicle body via the first screw fastener member 54. As seen in the figure, the bolt fastener member 61 of the first screw fastener member 54 is fixed to the reverse surface of the spoiler body 51, and the head portion 74 of the fastening bolt 73 is engaged in the bolt fastener member 61.

By the interval defining member 75 being fitted over the fastening bolt 73, the lower end portion 75b of the interval defining member 75 is placed on the supporting portion 81. The threaded portion 73a of the fastening bolt 73 is inserted through the mounting hole 81b to project downwardly out the hole 81b, and the fastening nut 77 is screwed onto the threaded portion 73a projecting out of the mounting hole 81b.

Namely, the first screw fastener member 54 extends from the rear spoiler 22, through the first through-hole 36, out of the middle upper frame member 26. The rear spoiler 22 is fixed to the middle upper frame member 26 via the first screw fastener member 54. In this state, the rear spoiler 22 is disposed over the upper wall 34 at a predetermined interval S from the upper surface of the wall 34.

Resilient member 111 is disposed between a front portion 22a of the reverse surface of the rear spoiler 22 and the tailgate windowpane 18, between a rear portion 22b of the reverse surface of the rear spoiler 22 and the upper wall 34, between a left portion (not shown) of the reverse side of the rear spoiler 22 and the upper wall 34, and between a right portion (not shown) of the reverse side of the rear spoiler 22 and the upper wall 34. Namely, the resilient member 111 is provided along the entire periphery of the reverse surface of the rear spoiler 22. Thus, the first to fourth through-holes 36 - 39, left and right positioning holes 41 and 42 and middle positioning hole 43 are separated from the outside of the vehicle body by means of the spoiler body 51 and resilient member 111. Further, the rear spoiler 22 can be reliably positioned over the upper wall 34 of the resin garnish 21 at the predetermined interval S from the upper surface of the wall 34.

The rear spoiler 22 is secured, at its portion 22c near the rear end of the reverse-surface front portion 22a, to the tailgate windowpane 18 by means of a Hook-and-Loop fastener 112. The Hook-and-Loop fastener 112 comprises a hook section 113 and a loop section 114, as well known.

The hook section 113 of the Hook-and-Loop fastener 112 engages with the loop section 114 with the rear spoiler 22 positioned at the predetermined interval S from the upper surface of the wall 34. In this way, the portion 22c near the rear end of the reverse-surface front portion 22a of the rear spoiler 22 can be detachably attached to the tailgate windowpane 18. As a result, it is possible to prevent a front portion 22d of the rear spoiler 22 from floating due to air resistance or drag so that the rear spoiler 22 can be stably retained in place.

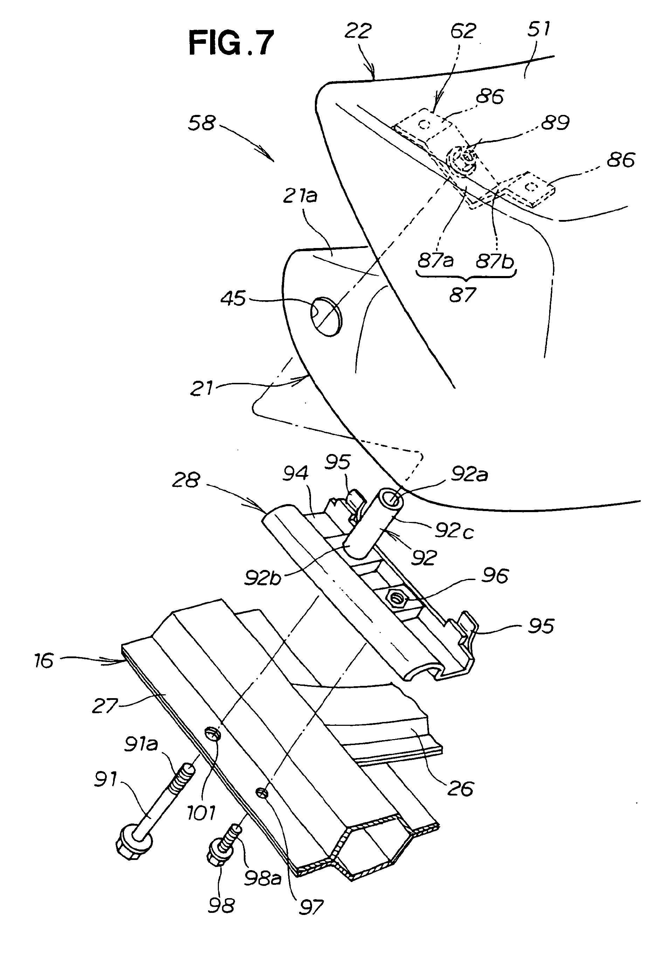

Fig. 7 shows in enlarged scale the left screw fastener member 58 shown in Fig. 2. As shown, the left screw fastener member 58 includes the side engaging member 62 having front and rear base portions 86 embedded in the spoiler body 51, a side bolt 91 screwed into the side engaging member 62, and a side interval defining member 92 for fitting engagement therein of the side bolt 91.

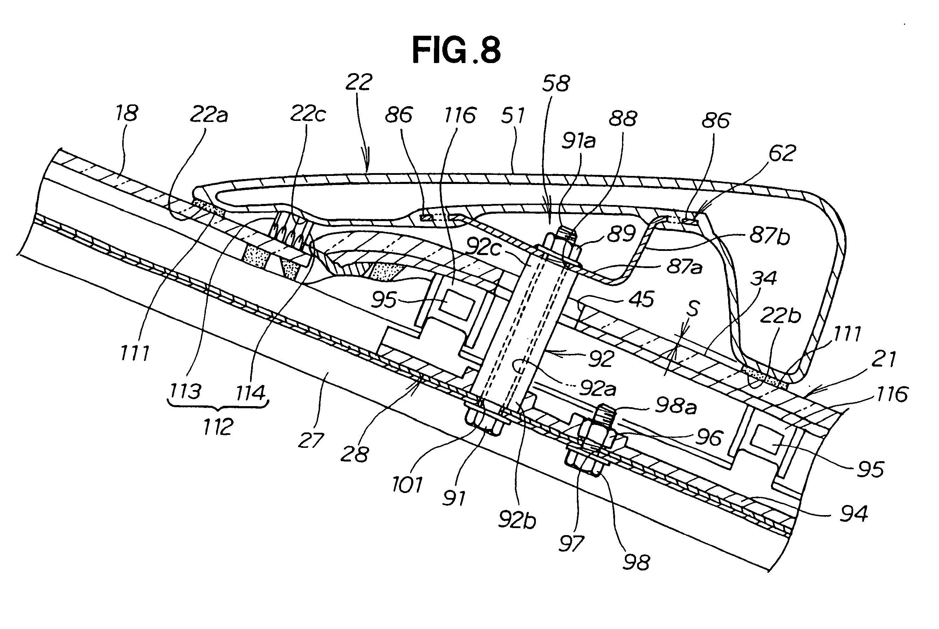

The side engaging member 62 includes an engaging portion 87 formed into a substantial V shape with front and rear slanting pieces 87a and 87b, a mounting hole 88 (Fig. 8) formed in the front slanting piece 87a, a welded nut 89 positioned coaxially with the mounting hole 88 and welded to the front slanting piece 87a, and the front and rear base portions 86 formed integrally with the front and rear ends of the engaging portion 87. By the front and rear base portions 86 being embedded in the spoiler body 51, the side engaging member 62 is attached integrally to the spoiler body 51.

The side interval defining member 92 is a tubular member having a through-hole 92a in which the side bolt 91 can be inserted therethrough and having a lower end portion 92b embedded in the left mounting bracket 28 (see also Fig. 8). The side interval defining member 92 is a collar member which extends from the spoiler body 51 to the left frame member 27 by passing through the left through-hole 45 of the garnish 21 with the side bolt 91 inserted therethrough. Thus, by means of the side interval defining member 92, the spoiler body 51 and left frame member 27 are spaced apart from each other by a predetermined distance.

The left mounting bracket 28 includes a base 94, and a pair of engaging hooks 95 formed on the base 94. The lower end portion 92b and mounting nut 96 of the side interval defining member 92 are embedded in the base 94. The left mounting bracket 28 is secured to the left frame member 27 by means of the mounting nut 96 and bolt 98.

Namely, the bolt 98 is inserted through a mounting hole 97 of the left frame member 27 so that a threaded portion 98a of the bolt 98 projects upwardly out of the mounting hole 97. The threaded portion 98a projecting upwardly out of the mounting hole 97 is screwed into the mounting nut 96, so that the left mounting bracket 28 is secured to the left frame member 27. In this state, the side interval defining member 92 is positioned coaxially with a fixing hole 101 of the left frame member 27.

The engaging hooks 95 of the left mounting bracket 28 engage with engagement portions 116 (Fig. 8) of the garnish 21. The engagement portions 116 are provided on the reverse surface of the left end portion 21c of the garnish 21. With the engagement portions 116 engaged with the engaging hooks 95 of the left mounting bracket 28, the left end portion 21c of the garnish 21 is secured to the left mounting bracket 28.

With the left end portion 21c secured to the left mounting bracket 28 as noted above, the side interval defining member 92 extends from the left frame member 27 toward the spoiler body 51 by passing through the left through-hole 45 of the garnish 21.

As the rear spoiler 22 is positioned on the garnish 21 in the aforementioned condition, the side interval defining member 92 is positioned coaxially with the welded nut 89, and an upper end portion 92c of the side interval defining member 92 is brought into abutting engagement with the front slanting piece 87a. Thus, as the side bolt 91 is inserted into the fixing hole 101 of the left frame member 27, it is inserted, through the fixing hole 101, into the through-hole 92a of the side interval defining member 92.

Threaded portion 91a of the side bolt 91 projects upwardly out of the through-hole 92a of the side interval defining member 92, and the upwardly-projecting threaded portion 91a is screwed into the welded nut 89.

The rear spoiler 22 is attached to the left frame member 27 with the side interval defining member 92 interposed between the left frame member 27 and the rear spoiler 22. With the side interval defining member 92 thus interposed, the spoiler body 51 and left frame member 27 are spaced apart from each other by the predetermined distance.

Referring now to Fig. 8, the bolt 98 is inserted through the mounting hole 97 of the left frame member 27, and the threaded portion 98a projecting upwardly out of the mounting hole 97 is screwed into the mounting nut 96, so that the left mounting bracket 28 is secured to the left frame member 27. In this state, the side interval defining member 92 can be positioned coaxially with the fixing hole 101 of the left frame member 27.

With the rear spoiler 22 disposed on the garnish 21 in the aforementioned manner, the upper end portion 92c of the side interval defining member 92 abuts against with, and the side interval defining member 92 is positioned coaxially with the welded nut 89 of the side engaging member 62. The lower end portion 92b of the side interval defining member 92 is embedded in the base 94 of the left mounting bracket 28.

In this state, the side bolt 91 is inserted, through the fixing hole 101 of the left frame member 27, into the through-hole 92a of the side interval defining member 92, and the threaded portion 91a projecting out of the through-hole 92a is screwed into the welded nut 89.

Namely, the left screw fastener member 58 extends from the left frame member 27 to the rear spoiler 22 by way of the left through-hole 45. Then, the rear spoiler 22 is fixed to the left frame member 27 by means of the left screw fastener member 58.

In this state, the rear spoiler 22 is positioned at the predetermined interval S from the upper surface of the wall 34 of the garnish 21.

As seen in Figs. 6 and 8, fixing the rear spoiler 22 to the tailgate 13 (Fig. 1) using the aforementioned fixation unit 23 (Fig. 2) can hold the rear spoiler 22 in a state where it does not impart a pressing force to the resin garnish 21. Thus, when thermal deformation (thermal expansion) has occurred in the rear spoiler 22 and garnish 21, the rear spoiler 22 and garnish 21 can be prevented from being positionally displaced relative to each other in a mutually-contacting state. As a result, the rear spoiler 22 and garnish 21 can be maintained in good outer appearance.

Particularly, because the garnish 21 and rear spoiler 22 are formed of different resin materials as set forth above, their respective thermal deformation (thermal expansion) amounts would differ from each other, so that it would be difficult to hold the rear spoiler 22 in a stable fixed state.

However, the fixation unit 23 of the present invention can hold the rear spoiler 22 in such a state where it does not impart a pressing force to the garnish 21. Thus, even when different thermal deformation (thermal expansion) has occurred in the garnish 21 and rear spoiler 22, the rear spoiler 22 can be reliably held in a stable fixed state.

Further, the rear spoiler 22 can be securely fixed in place by being fixed to the tailgate 13 by means of the fixation unit 23. Thus, even when air resistance (drag) acts on the rear spoiler 22, the rear spoiler 22 can be held in a stable fixed state.

In addition, with the interval defining members 75 and 92 of the fixation unit 23, a predetermined interval can be secured between the rear spoiler 22 and the tailgate 13, which can provide a mounting space where the garnish 21 is disposed. Thus, when the rear spoiler 22 is mounted in place by means of the fixation unit 23, it is possible to prevent the rear spoiler 22 from applying a load to the garnish 21.

Further, with the first to fourth screw fastener members 54 - 57 and left and right screw fastener members 58 and 59 of the fixation unit 23, the rear spoiler 22 can be screwed to the tailgate 13, so that the rear spoiler 22 can be reliably attached or assembled to the tailgate 13.

Furthermore, with the first to fourth screw fastener members 54 - 57 and left and right screw fastener members 58 and 59 of the fixation unit 23, the instant embodiment can achieve the following advantageous benefits.

Namely, the resilient member 111 is interposed between the rear spoiler 22 and the garnish 21, so that tightening force for fixing the rear spoiler 22 is applied to the garnish 21 by way of the resilient member 111. Such tightening force can be adjusted appropriately by adjusting the tightening amounts of the first to fourth screw fastener members 54 - 57 and left and right screw fastener members 58 and 59.

Referring back to Fig. 4, the left positioning member 64 includes the pin fastener member 68 having a base portion 103 embedded in the spoiler body 51, and a pin 107 fixed to the pin fastener member 68.

The base portion 103 of the left positioning member 64 is oriented in the width direction of the vehicle. The pin 107 of the left positioning member 64 is insertable in the left positioning hole 41 formed in the upper wall 34 of the garnish 21.

The middle positioning member 66 shown in Fig. 2 is generally similar in construction to the aforementioned left positioning member 64, except that the pin fastener member 68 of the middle positioning member 66 has the base portion 103 oriented in the front-rear direction of the vehicle. The pin 107 of the middle positioning member 66 is inserted in the middle positioning hole 43 of the upper wall 34.

The three pins 107 of the positioning unit 24 are inserted in the left, right and middle positioning holes 41, 42 and 43, so that the rear spoiler 22 can be positioned relative to the garnish 21.

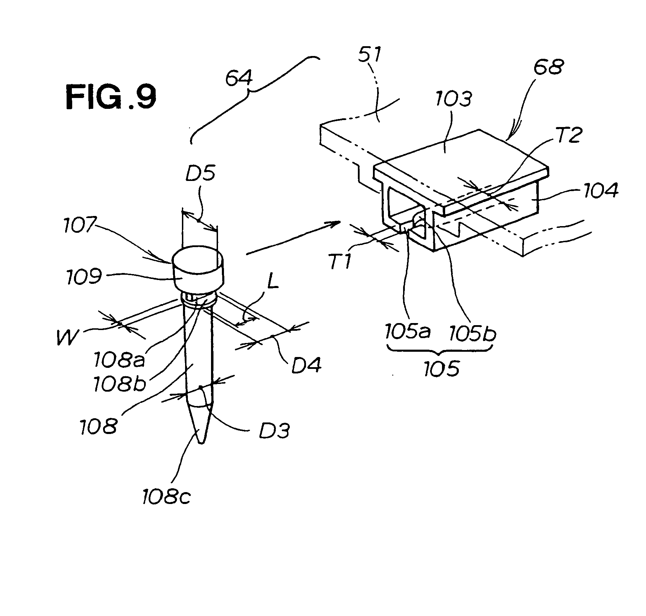

Fig. 9 is an exploded view of the left positioning member 64 shown in Fig. 2. As shown, the base portion 103 of the pin fastener member 68 is formed into a generally rectangular shape. The pin fastener member 68 has an engaging portion 104 formed integrally with the lower end of the base portion 103, and a guide groove 105 is formed in the bottom of the engaging portion 104.

The guide groove 105 has an inlet portion 105a of a relatively small width T1, and a portion 105b of a greater width T2 behind the inlet portion 105a; namely, the width T1 of the inlet portion 105a is smaller than the width T2 of the portion 105b.

The pin fastener member 68 is integrally fixed to the spoiler body 51 by the base portion 103 being embedded in the spoiler body 51 with the guide groove 105 oriented in the width direction of the vehicle (see Fig. 4).

The pin 107 has a pin body 108 of a columnar shape, and a head portion 109 provided on the upper end (neck portion) 108a of the pin body 108. The pin body 108 is a columnar portion of a diameter D3, which has a flange 108b at the lower end of the neck portion 108a and a downwardly tapered distal end portion 108c.

The diameter D3 of the pin body 108, diameter D4 of the flange 108b, width T1 of the inlet portion 105a and width T2 of the portion 105b behind the inlet portion 105a have relationship of T1 < D3 < T2 < D4.

The neck portion 108a has a length L and a width W smaller than the width T1 of the inlet portion 105a. The head portion 109 has a circular portion of a diameter D5 greater than the width T2 of the inner portion 105b behind the inlet portion 105a.

Further, the length L of the neck portion 108a is smaller than the width T2 of the portion 105b of the engaging portion 104. Thus, the neck portion 108a is rotatable within the inner portion 105b behind the inlet portion 105a.

The upper end or neck portion 108a of the pin 107 is inserted into the inner portion 105b through the inlet portion 105a and then the pin 107 is turned through 90°, so that the neck portion 108a can be prevented from accidentally getting out through the inlet portion 105a. As a result, the pin 107 can be reliably fixed to the pin fastener member 68.

In addition, because the guide groove 105 of the left positioning member 64 is orientated in the width direction of the vehicle, the pin 107 can be positionally adjusted in the width direction of the vehicle.

Similarly, the guide groove 105 of the right positioning member 65 is orientated in the width direction of the vehicle, and thus, the pin 107 can be positionally adjusted in the width direction of the vehicle.

Further, the middle positioning member 66 shown in Fig. 2 is similar in construction to the aforementioned left positioning member 64, except that the guide groove 106 of the middle positioning member 66 is oriented in the front-rear direction of the vehicle.

The middle positioning member 66 is provided in a middle position, in the vehicle width direction, of the rear spoiler 22, and the guide groove 106 (Fig. 2) of the middle positioning member 66 is oriented in the front-rear direction of the vehicle; thus, the pin 107 of the middle positioning member 66 can be positioned in the middle position, in the vehicle width direction, of the rear spoiler 22. Thus, by inserting the pin 107 of the middle positioning member 66 in the middle positioning hole 43 of the garnish 21, the middle, in the vehicle width direction, of the rear spoiler 22 can be vertically aligned with the middle, in the vehicle width direction, of the garnish 21.

Because the pins 107 of the left and right positioning members 64 and 65 shown in Fig. 2 are adjustable in the vehicle width direction and the pin 107 of the middle positioning member 66 is located in the middle in the vehicle width direction, the rear spoiler 22 can be readily attached to a predetermined position of the garnish 21.

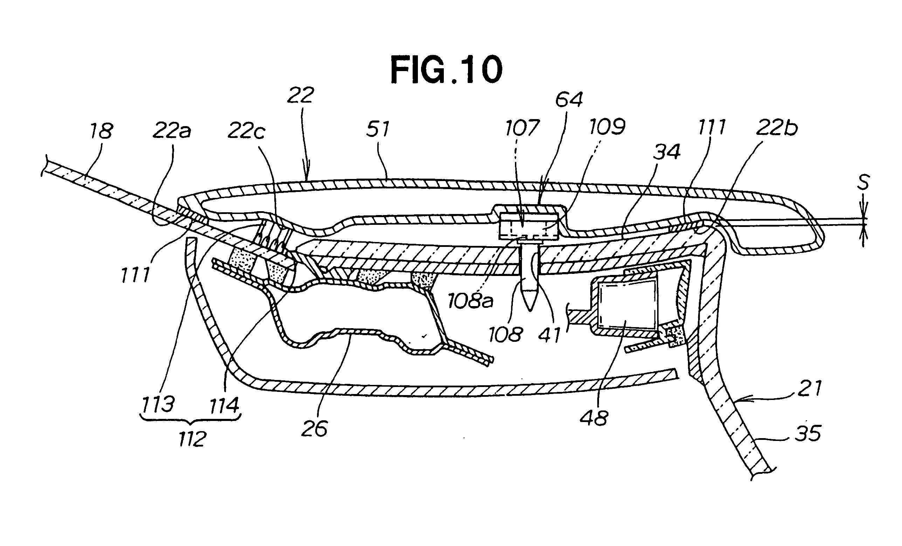

Fig. 10 shows the rear spoiler 22 appropriately positioned by means of the left positioning member 64. The left positioning member 64 is disposed on a left end portion of the reverse surface of the rear spoiler 22.

More specifically, the rear spoiler 22 is positioned over the garnish 21, and then the pin body 108 of the left positioning member 64 is inserted in the left positioning hole 41.

Similarly, the pin body 108 of the right positioning member 65 is inserted in the right positioning hole 42, and the pin body 108 of the middle positioning member 66 is inserted in the middle positioning hole 43.

Namely, using the positioning unit 24 in the aforementioned manner, the rear spoiler 22 is appropriately positioned on the predetermined position of the garnish 21.

The garnish 21 is attached to the tailgate 13 in appropriately positioned relation to the latter. Thus, the rear spoiler 22 can be positioned on the predetermined position of the tailgate 13 by being positioned relative to the garnish 21. In this way, the rear spoiler 22 can be significantly attached to the tailgate 13 with an even further enhanced efficiency.

Further, because the rear spoiler 22 is positioned relative to the garnish 21 by means of the positioning unit 24, the assemblying accuracy of the rear spoiler 22 relative to the garnish 21 can be enhanced.

Next, with reference to Figs. 2, 3, 11 and 12, a description will be given about an operational sequence for attaching the rear spoiler 22.

As illustrated in Fig. 3, the left mounting bracket 28 is secured to the left frame member 27 by means of the bolt 98, and the right mounting bracket 32 is secured to the right frame member 31 by means of the bolt 98.

Then, as shown in Fig. 2, the left and right end portions 21c and 21d of the resin garnish 21 are attached to the left and right mounting brackets 28 and 32, and the upper and lower end portions 21a and 21b of the resin garnish 21 are attached to the middle upper frame member 26 and middle lower frame member (not shown). In this manner, the garnish 21 is fixed to the tailgate frame 16.

Then, the fastening bolts 73 of the first to fourth screw fastener members 54 - 57 are secured to the reverse surface of the spoiler body 51 via the bolt fastener members 61. In this state, the interval defining members 75 are fitted over the fastening bolts 73 of the first to fourth screw fastener members 54-57.

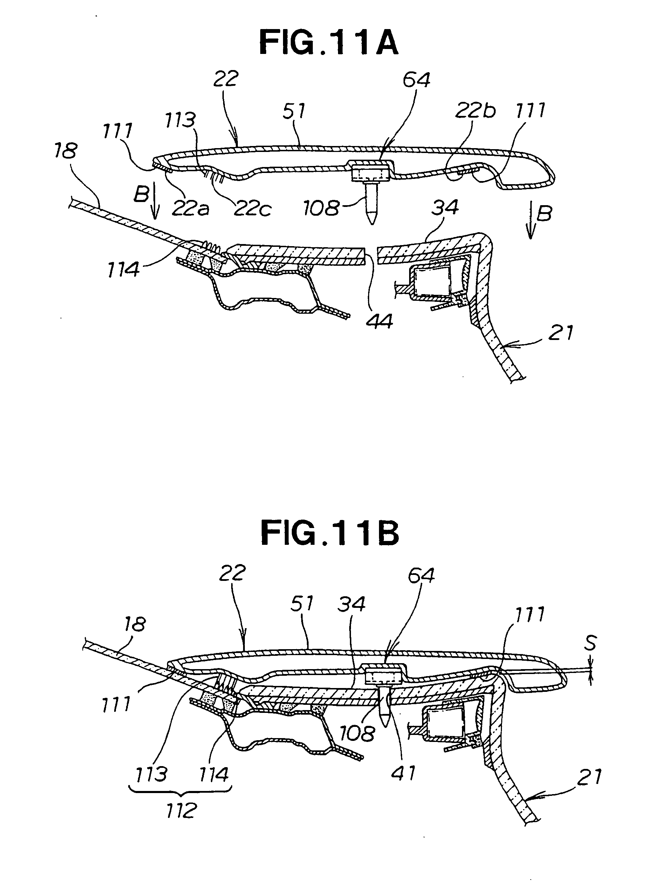

Then, as shown in Fig. 11A, the resilient member 111 is adhered to the entire periphery of the reverse surface of the rear spoiler 22. Further, the hook section 113 of the Hook-and-Loop fastener 112 is fixed to the reverse surface of the rear spoiler 22 at the portion 22c near the rear end of the resilient member 111. Further, the loop section 114 of the Hook-and-Loop fastener 112 is fixed to the tailgate windowpane 18 in opposed relation to the hook section 113. Then, the rear spoiler 22 is moved downward toward the upper wall 34 of the garnish 21 as indicated by arrow B.

Then, as shown in Fig. 11B, the rear spoiler 22 is positioned on the garnish 21 so that the pin body 108 of the left positioning member 64 is inserted in the left positioning hole 41. Similarly, the pin body 108 of the right positioning member 65 shown in Fig. 2 is inserted in the right positioning hole 42, and the pin body 108 of the middle positioning member 66 is inserted in the middle positioning hole 43. In this manner, the rear spoiler 22 is appropriately positioned to the predetermined position of the garnish 21.

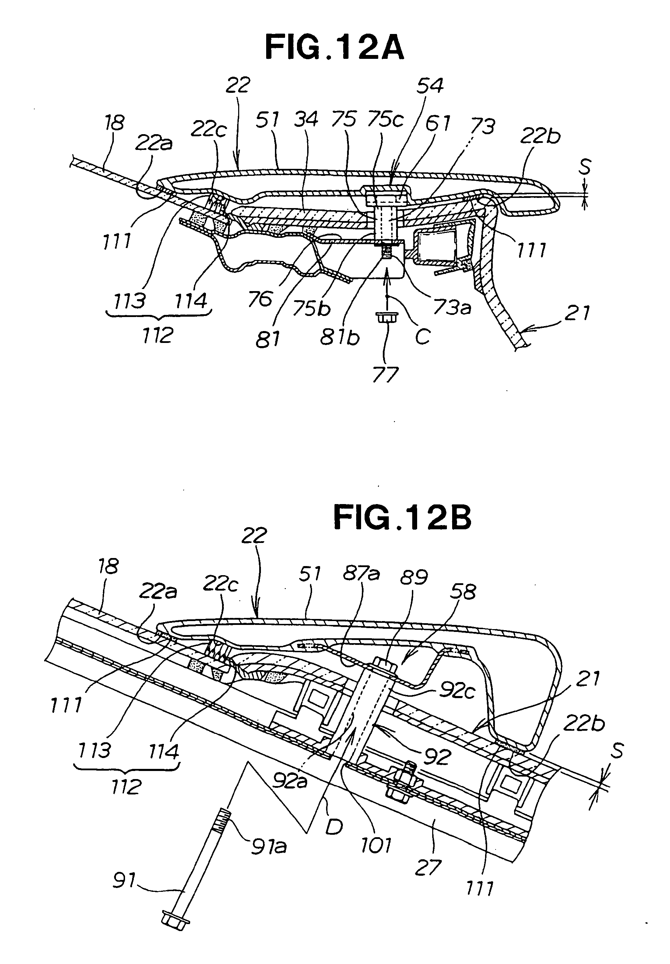

Then, as shown in Fig. 12A, the fastening bolt 73 of the first screw fastener member 54 is inserted in the mounting hole 81b of the fastening bracket 76 so that the threaded portion 73a of the fastening bolt 73 projects downward out of the mounting hole 81b. Thus, the lower end portion 75b of the interval defining member 75 abuts against the supporting portion 81, and the upper end portion 75c of the interval defining member 75 abuts against the bolt fastener member 61. The fastening nut 77 is screwed onto the threaded portion 73a projecting out of the mounting hole 81b, as indicated by arrow C.

Similarly to the fastening bolt threaded portion 73a of the first screw fastener member 54, the fastening bolt threaded portion 73a of each of the second to fourth screw fastener members 55 - 57 is coupled with the respective fastening nut 77.

Then, as shown in Fig. 12B, the upper end portion 92c of the left screw fastener member 58 is brought into abutment against the front slanting piece 87a of the side engaging member 62, and, in this state, the side interval defining member 92 is positioned coaxially with the welded nut 89 of the side engaging member 62. The side bolt 91 is inserted, through the fixing hole 101 of the left frame member 27, into the through-hole 92a of the side interval defining member 92 as indicated by arrow D, and the threaded portion 91a projecting out of the through-hole 92a is screwed into the welded nut 89.

Referring back to Fig. 12A, the resilient member 111 adhered to the entire periphery of the reverse surface of the rear spoiler 22 is pressed against the tailgate windowpane 18 and the upper wall 34 of the garnish 21 with an adhesive placed therebetween. Further, the hook section 113 of the hook-and-loop fastener 112 engages with the loop section 114.

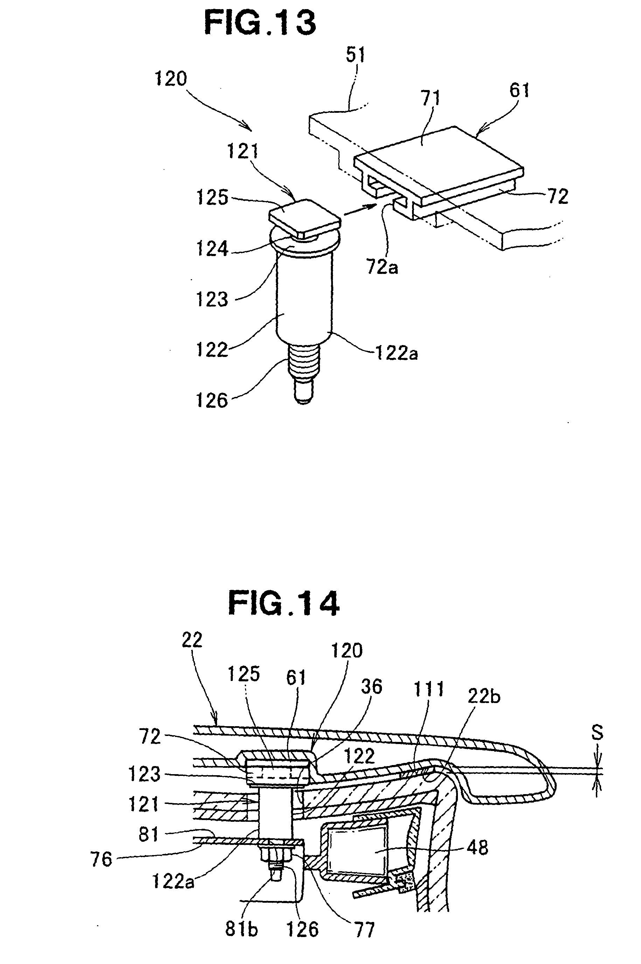

Next, with reference to Figs. 13 and 14, a description will be given about a second embodiment of the present invention which employs a modified first screw fastener member 120 (i.e., modification of the aforementioned first screw fastener member 54). Elements of the modified screw fastener member 120, identical or similar in construction to those in the first screw fastener member 54, are indicated by the same reference characters and will not be described below to avoid unnecessary duplication.

Referring to Fig. 13, the modified screw fastener member 120 is different from the aforementioned first screw fastener member 54 only in that it uses a fastening bolt 121 in place of the fastening bolt 72 and interval defining member 75 used in the aforementioned first screw fastener member 54.

The fastening bolt 121 in the modified first screw fastener member 120 integrally has: a space defining portion 122 of a columnar shape; a flange 123 formed at an upper end portion of the space defining portion 122; a lower neck portion 124 projecting upwardly from the flange 123; a head portion 125 formed at an upper end portion of the lower neck portion 124; and a threaded portion 126 formed on a lower end portion 122a of the space defining portion 122. These portions 122, 123, 124, 125 and 126 are formed coaxially on the fastening bolt 121. The space defining portion 122 performs a similar function to the interval defining member 75 used in the aforementioned first screw fastener member 54. The fastening bolt 121 is engaged in the engaging portion 72.

More specifically, the head portion 125 of the fastening bolt 121 is inserted in the engaging portion 72 and the lower neck portion 124 of the fastening bolt 121 is inserted in the guide groove 72a as indicated by an arrow, so that the fastening bolt 121 is engaged in the bolt fastener member 61.

Because the head portion 125 of the fastening bolt 121 is formed into a rectangular shape, the fastening bolt 121 engaged in the bolt fastener member 61 can be prevented from rotating. Namely, the fastening bolt 121 is non-rotatably secured, via the bolt fastener member 61, to the spoiler body 51.

In the fastening bolt 121 secured to the spoiler body 51, as illustrated in Fig. 14, the space defining portion 122 projects downwardly from the engaging portion 72, and a lower end portion 122a of the space defining portion 122 is placed on the supporting portion 81 of the fastening bracket 76 with a threaded portion 126 of the fastening bolt 122 projecting downwardly from the supporting portion 81.

More specifically, the threaded portion 126 of the fastening bolt 121 projects downwardly out of the mounting hole 81b, onto which the fastening nut 77 is screwed.

The modified first screw fastening member 120 employed in the second embodiment can achieve the same advantageous benefit as the first screw fastening member 54 employed in the first embodiment. In addition, the modified first screw fastening member 120, where the space defining portion 122 is formed integrally on the fastening bolt 121, can reduce the number of necessary components and thus even further enhance the assembling efficiency of the rear spoiler mounting structure.

Whereas the second embodiment of Figs. 13 and 14 has been described above in relation to the case where the modified first screw fastening member 120 is used in place of the first screw fastening member 54 of the first embodiment, such screw fastening members 120 may be used as modified second to fourth screw fastening members in place of the second to fourth screw fastening members 55 - 57 of the first embodiment.

Note that the shapes of the individual component parts constituting the fixation unit 23 and positioning unit 24 in the above-described embodiments may be modified as necessary.

Furthermore, whereas the embodiments of the present invention have been described above in relation to the case where the rear spoiler is fixedly mounted on the tailgate having the garnish, the present invention is not so limited, and the rear spoiler may be fixed mounted directly on a rear vehicle body section of vehicles having no tail gate, such as sports cars.

Disclosed is a structure for fixedly mounting a resin-made rear spoiler (22) to a tailgate (13) having a resin-made garnish (21). Using a fixation unit (23), the rear spoiler is fixed to the tailgate via the garnish and held in a stable fixed state.

## Claims

1. A rear spoiler mounting structure, comprising:
a resin garnish (21) attached to a vehicle body (11) for use as an exterior member of the vehicle, said garnish (21) having a plurality of through-holes (36, 37, 38, 39) formed therein; and
fixation means (23) extending from the rear spoiler (22) to the vehicle body (11), via the through-holes (36, 37, 38, 39), for fixing the rear spoiler (22) to the vehicle body (11) with the rear spoiler (22) positioned on said garnish (21),
**characterized in that** said fixation means (23) includes a plurality of interval defining members (75; 122) for defining an interval between the rear spoiler (22) and the vehicle body (11).

2. The structure of claim 1,
further comprising positioning means (24) for positioning the rear spoiler (22) relative to said garnish (21).

3. The structure of claim 1,
wherein said fixation means (23) includes a plurality of screw fastener members (54, 55, 56, 57; 120).

4. The structure of claim 1,
wherein said garnish (21) and the rear spoiler (22) are formed of mutually different resin materials.

## Patentansprüche

1. Heckspoiler-Montage-Struktur, umfassend:
eine an einer Fahrzeugkarosserie (11) befestigte Harz-Verzierung (21) zur Benutzung als ein äußeres Element des Fahrzeugs, wobei die Verzierung (21) eine Mehrzahl von darin ausgebildeten Durchgangslöchern (36, 37, 38, 39) aufweist; und
Befestigungsmittel (23), die sich von dem Heckspoiler (22) zu der Fahrzeugkarosserie (11) über die Durchgangslöcher (36, 37, 38, 39) erstrecken, zum Befestigen des Heckspoilers (22) an der Fahrzeugkarosserie (11), wobei der Heckspoiler (22) auf der Verzierung (21) positioniert ist,
**dadurch gekennzeichnet, dass** die Befestigungsmittel (23) eine Mehrzahl von Abstands-definierenden Elementen (75; 122) zum Definieren eines Abstands zwischen dem Heckspoiler (22) und der Fahrzeugkarosserie (11) umfassen.

2. Struktur nach Anspruch 1,
weiter umfassend Positionierungsmittel (24) zum Positionieren des Heckspoilers (22) in Bezug auf die Verzierung (21).

3. Struktur nach Anspruch 1,
wobei die Befestigungsmittel (23) eine Mehrzahl von Schrauben-Befestigungsmitteln (54, 55 ,56, 57; 120) umfassen.

4. Struktur nach Anspruch 1,
wobei die Verzierung (21) und der Heckspoiler (22) aus gegenseitig verschiedenen Harz-Materialien gebildet sind.

## Revendications

1. Structure d'assemblage de déflecteur arrière, comprenant :
une garniture (21) en résine, fixée à une carrosserie de véhicule (11), pour utilisation en tant qu'organe extérieur du véhicule, ladite garniture (21) comprenant une pluralité de trous traversants (36, 37, 38, 39) formés en son sein et
des moyens de fixation (23), s'étendant du déflecteur arrière (22) à la carrosserie de véhicule (11), via les trous traversants (36, 37, 38, 39), pour fixer le déflecteur arrière (22) à la carrosserie de véhicule (11), le déflecteur arrière (22) étant positionné sur ladite garniture (21),
**caractérisé en ce que** lesdits moyens de fixation (23) comprennent une pluralité d'organes de définition d'intervalle (75 ; 122), pour définir un intervalle entre le déflecteur arrière (22) et la carrosserie de véhicule (11).

2. Structure selon la revendication 1,
comprenant outre des moyens de positionnement (24), pour positionner le déflecteur arrière (22) par rapport à ladite garniture (21).

3. Structure selon la revendication 1,
dans laquelle lesdits moyens de fixation (23) comprennent une pluralité d'organe de fixation par vissage (54, 55, 56, 57 ; 120).

4. Structure selon la revendication 1,
dans laquelle ladite garniture (21) et le déflecteur arrière (22) sont formés de résines mutuellement différentes.
